(19) **Europäisches Patentamt**

**European Patent Office**

**Office européen des brevets**

(11) Veröffentlichungsnummer: **0 406 689 A1**

# (12) EUROPÄISCHE PATENTANMELDUNG

(21) Anmeldenummer: **90112242.4**

(22) Anmeldetag: **27.06.90**

(51) Int. Cl.5: **C02F 3/28, B01D 21/00**

(30) Priorität: **05.07.89 DD 330461**

(43) Veröffentlichungstag der Anmeldung:
**09.01.91 Patentblatt 91/02**

(84) Benannte Vertragsstaaten:
**AT DE DK NL SE**

(71) Anmelder: **VEB CHEMIE- UND TANKANLAGENBAU, FÜRSTENWALDE**
**Strasse der Befreiung 49**
**DDR-1240 Fürstenwalde(DD)**

(72) Erfinder: **Hackenberger, Joachim, Dr. sc. techn.**
**Jacobsgasse 2**
**DD-8010 Dresden(DD)**
Erfinder: **Voigt, Waltraud**
**Leninplatz 22**
**DD-1017 Berlin(DD)**
Erfinder: **Krügel, Meinfried**
**Friedrich-Emngels-Damm 64**
**DD-1242 Bad Saarow(DD)**

(74) Vertreter: **Kolb, Helga, Dr. Dipl.-Chem. et al**
**Hoffmann, Eitle & Partner Patentanwälte**
**Arabellastrasse 4e 4**
**D-8000 München 81(DE)**

(54) **Verfahren zur anaeroben zweistufigen Behandlung organisch belasteter Abwässer und Schlämme.**

(57) Die Erfindung betrifft ein Verfahren zur anaeroben zweistufigen Behandlung organisch belasteter Abwässer und Schlämme, wobei der Lastbereich der 1. und 2. Stufe auf die im System vorhandenen Feststoffe als Träger der Biomasse bezogen wird. Die Feststoffkonzentration in den Reaktoren ist durch eine Feststoffabtrennung und Feststoffrückführung unabhängig gestaltet. Infolge Feststoffimport und Feststoffrückführung in der 1. Stufe wird der Feststoff eingedickt, als Überschussschlamm abgezogen und in die 2. Stufe übergepumpt, so dass in der 1. Stufe unabhängig von der Stabilisierung eine hohe Feststoffbelastung einstellbar ist und in der 2. Stufe die Stabilisierung erfolgt.

EP 0 406 689 A1

# VERFAHREN ZUR ANAEROBEN ZWEISTUFIGEN BEHANDLUNG ORGANISCH BELASTETER ABWÄSSER UND SCHLÄMME

Die Erfindung betrifft ein Verfahren zur anaeroben zweistufigen Behandlung organisch belasteter Abwässer und Schlämme, bei dem in der ersten Stufe eine höhere Raumbelastung eingestellt wird.
Das erfindungsgemäße Verfahren eignet sich besonders zur Behandlung kommunaler Schlämme.

Charakteristik des bekannten Standes der Technik

Der mikrobielle Abbau organischer Verbindungen kann wahlweise auf aerobem Wege unter Sauerstoffzufuhr oder auf anaerobem Wege unter Luftabschluß erfolgen.
Anaerobe Verfahren besitzen eine geringere Stoffwechselgeschwindigkeit und beanspruchen gegenüber aeroben Verfahren größere Reaktionsvolumina. Dem steht als Vorteil der geringe Energiebedarf und ein Energiegewinn in Form des im Prozeß gebildeten Methangases gegenüber. Ein verstärker Einsatz anaerober Verfahren setzt die Verringerung des Reaktionsvolumens bei gleichbleibender oder steigender Biogasausbeute voraus.
Dem steht bei der überwiegenden Mehrzahl anaeroben Verfahren zur Behandlung kommunaler Schlämme die leistungsbegrenzende Forderung nach einer Stabilisierung der organischen Inhaltsstoffe entgegen. Angestrebt wird im Rahmen de anaeroben Prozesses eine Reduzierung des organischen Anteils der Trockensubstanz[oTS]auf 50 bis 55 %.
Erreicht wird diese Zielstellung durch eine geringe Raumbelastung mit organischer Trockensubstanz, die in Abhängigkeit von der Anlagengröße 1,0 kg/m$^3$d bis 2,0 kg/m$^3$d beträgt. Mit diesen geringen Raumbelastungen sind weitere Volumenvergrößerungen verbunden, die über das von der Stoffwechselgeschwindigkeit festgelegte Maß hinausgehen.
Es sind deshalb zweistufige Verfahren entwickelt worden, bei denen in der 1. Stufe eine höhere Raumbelastung gewählt wird und der uneffektive Abbau der Restsubstanz in der 2. Stufe erfolgt. Durch eine einfache bautechnische Gestaltung (z. B. in Erdbauweise) und unter Verzicht einer Biogasgewinnung wird vielfach der Investitionsaufwand der zweiten Stufe reduziert.
Zur Erhaltung einer stabilen Mikroorganismenpopulation ist es im Allgemeinen üblich, die Ausspülverluste an Biomasse durch den Mikroorganismenzuwachs zu ergänzen. Damit wird die Aufenthaltszeit und hiervon abhängig auch die Raumbelastung in der Methanfermentation nicht nur vom Substratabbau, sondern auch von der Mikroorganismenzuwachsrate bestimmt. Aus den geringen Zuwachsraten der Methanbakterien folgen erhebliche Reaktionszeiten in der Methanfermentation. Eine Verkürzung der Reaktionszeiten ist nur dann gegeben, wenn die Ausspülverluste an Biomasse begrenzt oder die ausgespülte Biomasse wieder in den Faulprozeß zurückgeführt werden. Hierzu erfolgt bei einer Reihe von Verfahren eine Biomassefixierung auf Bewuchsträgern. Bei diesen Fest- oder Fließbettreaktoren führen jedoch Feststoffe im auszufaulenden Substrat zu erheblichen technischen Problemen, so daß eine Anwendung dieser Verfahren auf feststoffreie Substrate begrenzt bleibt.
Andere bekannte Verfahren arbeiten mit einer nachgeschalteten Sedimentation, mit deren Hilfe die ausgespülte Biomasse abgetrennt und wieder in den anaeroben Prozeß zurückgeführt wird. Aufgrund der hohen Feststoffanteile im kommunalen Faulprozeß kann diese nachgeschaltete Trennstufe nur als Eindickung wirken. Im Verlaufe des Eindickvorganges erzeugen die aufeinander lagernden Flocken im Inneren der Schlammschicht einen Überdruck im Porenwasser, der allmählich durch das Herauspressen des überschüssigen Wassers aus der Schlammschicht abgebaut wird. Dieser Vorgang erfordert sehr lange Eindickzeiten. Hiermit verbunden sind bei tiefen Außentemperaturen erhebliche Wärmeverluste und Temperaturunterschiede zwischen der Faulstufe und der nachgeschalteten Sedimentation. Infolge dieser Temperaturunterschiede, denen die Methanbakterien ausgesetzt sind, wird die Reaktionsgeschwindigkeit in der Methanfermentation herabgesetzt.
Im Verlaufe der Eindickung ist bei kommunalen Schlämmen eine Feststoffkonzentration von max. 60 kg TS/m$^3$ erreichbar. Diese Konzentration unterscheidet sich nicht wesentlich von der Feststoffkonzentration im Reaktor, so daß bei einer Biomasserückführung die Populationsdichte in der Methanfermentation nur geringfügig gesteigert wird. Zur Vermeidung dieser Probleme wird anstelle der externen Sedimentation eine Biomasseabscheidung direkt im Faulbehälter vorgesehen, wobei durch einen Verzicht auf eine Umwälzung eine gezielte Entmischung im Reaktor stattfindet, die einen feststoffarmen Faulwasserabzug im Bereich der Behälteroberfläche gestattet. Damit werden allerdings die Stoffwechseltransportvorgänge im Bereich der Bakterienzellen und hiervon abhängig die Leistungsparameter des Gesamtsystems nachteilig beeinflußt.

EP 0 406 689 A1

Hinzu kommen technische Probleme einer wirksamen Bekämpfung der Schwimmschlammdecke bei fehlender Umwälzung.

Leistungsmindernd ist zudem die Tatsache, daß unabhängig von der Populationsdichte im Faulprozeß die Einhaltung der Stabilisierungsgrenze durch eine minimale Raumbelastung gesichert werden soll. Damit sind die Leistungsgrenzen des Verfahrens nicht eindeutig fixiert. Hinzu kommt, daß sich bei einer Trennung des anaeroben Prozesses in eine hochbelastete erste Stufe und eine anschließende schwachbelastete zweite Stufe die Anwendung einer Feststoffrückführung verbietet, da die in die Hochleistungsstufe zurückgeführten und verbleibenden organischen Feststoffanteile stabilisiert werden müssen und somit die gleichen niedrigen Raumbelastungen erfordern wie die der zweiten Stufe. Dementsprechend ist die oTS-Raumbelastung der ersten Stufe auch auf Werte $R_B \leq 2,5$ kg/m$^3$ . d begrenzt. Dies entspricht in etwa einer maximalen oTS-Feststoffbelastung 0,05 kg/kg Ts . d. Bekannt sind auch Verfahren, bei denen anaerobe Kreislauffilter mit einer organischen Belastung von $\geq$ 0,5, beispielsweise 8 oder 16 kg CSB/m$^3$ . Tag betrieben werden.

Das Ziel der Erfindung besteht in der Erhöhung der Leistungsfähigkeit der Methanfermentation, der weitergehenden Fixierung der Leistungsgrenze des Verfahrens und in der Verbesserung des Wirkungsgrades durch Biomasserückführung bei gleichzeitiger Einsparung von Energie, Material und Kosten.

## Darlegung des Wesens der Erfindung

Der Erfindung liegt die Aufgabe zugrunde, den maximalen Lastbereich der ersten Stufe und den minimalen Lastbereich der zweiten Stufe durch das im System vorhandene Biomasse-Feststoffgemisch einzustellen.

Erfindungsgemäß wird diese Aufgabe dadurch gelöst, daß die erste Stufe mit hohem Substratumsatz und die zweite nachgeschaltete Stufe mit weitgehender Stabilisierung der organischen Substanz gefahren wird, die in die erste Stufe eingetragenen Feststoffe sowie die durch den hohen Substratumsatz erzeugte Biomasse im Reaktor mittels der an sich bekannten Röhrensedimentation zurückgehalten und angereichert werden, wobei die Feststoffe gleichzeitig Träger der Biomasse sind und durch eine gezielte Eindickung mittels einem gesteuerten Abzug des Biomasse-Feststoffgemisches feststoffbezogene Leistungsgrenzen für die erste Stufe von max. oTS Feststoffbelastung $\leq$ 0,12 kg/kg TS . d und max. CSV$_{Cr}$Feststoffbelastung $\leq$ 0,09 kg/kg TS . d eingestellt werden, und daß mit dem Feststoffabzug das Überschußschlamm-Feststoffgemisch in die nachfolgende schwachbelastete zweite Stufe zur Stabilisierung übergepumpt wird, wobei der organische Anteil auf $\leq$ 55 % durch Regulierung der maximalen Belastungswerte von oTS Feststoffbelastung $\leq$ 0,025 kg/kg TS . d und CSV$_{Cr}$Feststoffbelastung $\leq$ 0,015 kg/kg TS . d reduziert wird.

Die erfindungsgemäße Aufgabe wird weiter dadurch gelöst, daß die Grenzwerte durch die an sich bekannte Röhrensedimentation eingestellt werden, wobei die Verbindungsleitungen mit einem Neigungswinkel von 40 bis 60° von unten aus dem ersten Reaktor nach oben in den zweiten Reaktor geführt werden und das Verhältnis von Länge zu Querschnitt der Verbindungsleitungen $\geq$ 8 : 1 beträgt.

In weiterer Ausgestaltung des erfinduangsgemäßen Verfahrens wird das Biomasse-Feststoffgemisch der ersten Stufe im gewählten Feststoffabscheidesystem im Zusammenwirken mit einer an sich bekannten nicht durchmischten Eindickzone von 10 % des Reaktorvolumens auf einen Feststoffgehalt von $\geq$ 10 % eingedickt.

Die technisch ökonomischen Auswirkungen der Erfindung, insbesondere ihre Effektivität besteht in der Erhöhung der Leistungsfähigkeit der Methanfermentation und in der weitergehenden Fixierung der Leistungsgrenze des Verfahrens. Das erfindungsgemäße Verfahren zeichnet sich ferner dadurch aus, daß der Wirkungsgrad durch die Biomasserückführung verbessert wird und Material, Energie sowie Kosten eingespart werden.

## Ausführungsbeispiel

Die Erfindung soll nachstehend an einem Ausführungsbeispiel näher erläutert werden.

Das städtische Abwasser von etwa 500 000 EWG ist nach dem erfindungsgemäßen Verfahren in einer kommunalen Kläranlage mit mechanisch-biologischer Aufbereitung zu behandeln. Gemäß Werkstandard WAPRO 2.19/01 des VEB Kombinat Wassertechnik und Projektierung Wasserwirtschaft ergibt sich ein täglicher Schlammanfall mit einer Trockensubstanzmenge von

85g/Ed . 500 000 EW = 42 500 kg/d oder

einen oTS-Anfall von

61g/Ed . 500 000 EW = 30 500 kg/d≈30 000 kg/d.

3

Der entsprechend Werkstandard WAPRO 2.19/03 erforderliche Volumenbedarf für eine mesophile Faulung bei 30 °C beträgt mit einer vorgegebenen oTS-Raumbelastung von 1,5 kg/m³ . d

$$V_{erf} = \frac{30\ 000}{1,5} \approx 20\ 000\ m^3\ \text{Faulraum}$$

Bei Anwendung des erfindungsgemäßen Verfahrens wird für die Faulung des oTS-Anfalles von etwa 30 000 kg/Tg folgender Volumenbedarf ermittelt.

Die täglich anfallende Schlammenge wird einer ersten Faulstufe zugeführt. Der Reaktor ist entsprechend WP 206 365 mit einer Nachklärvorrichtung, bestehend aus mehreren Röhren, zur Abtrennung und selbständigen Rückführung von Mikroorganismen sowie unbelebten Feststoffen ausgerüstet, wobei die Röhren gleichzeitig als Verbindungsleitungen zum Transport der Flüssigphase mit einem Winkel von 45° von unten aus dem Reaktor der ersten Stufe nach oben in den Reaktor der zweiten Stufe geführt werden und das Verhältnis von Länge zum Querschnitt 12 : 1 beträgt.

Durch die Nutzung der Verbindungsleitung zwischen der ersten und zweiten Stufe zur Biomasseabtrennung und Rückführung werden die Ausspülverluste an Biomasse begrenzt, so daß die Zuwachsrate an Biomasse in der Methanfermentation nicht mehr die hydraulische Durchsatzrate und damit die Leistungsparameter der ersten Stufe begrenzt. Die Feststoffe im System dienen als Träger der Biomasse. Damit sind den Feststoffen bestimmte maximale und minimale Lastbereiche zugeordnet, bei deren Überschreitung der Prozeß zusammenbricht oder eine Stabilisierung der organischen Substanz nicht mehr im gewünschten Umfang erfolgt. Da die Stabilisierung und hiermit verbunden die Abnahme der organischen Substanz erst bei Unterschreitung eines minimalen Lastbereiches offensichtlich wird, ist die oTS-Belastung als Leistungsparameter für die Methanfermentation nur bedingt aussagekräftig. Es wird deshalb zur Charakterisierung der Methanfermentation von der Produktbildung ausgegangen und hiervon der Begriff der Biogasbildungsgeschwindigkeit als neuer Leistungsparameter der Methanbakterien geschaffen.

Als Träger der Biomasse werden die Feststoffe leistungsbestimmend. Deshalb sind die Verbindungsleitungen zwischen den Reaktoren zur Feststoffabtrennung und Feststoffrückführung einsetzbar.

Die Verbindungsleitungen können aus einem Rohr, mehreren Röhren oder Kastenprofilen bestehen und besitzen einen Neigungswinkel von 40 bis 60°, im vorliegenden Beispiel, wie oben ausgeführt, 45°.

Bei dem gewählten Verhältnis der Röhrenlänge zum Röhrendurchmesser von 12 : 1, mindestens jedoch 8 : 1 legen die Feststoffe eine im Verhältnis zur Oberfläche nur sehr kurze Sedimentationsstrecke zurück und gelangen dann auf den Boden der Verbindungsleitungen, von dem sie infolge des gewählten Neigungswinkel wieder in den Reaktor zurückrutschen.

Durch den Biomassezuwachs, den Feststoffimport und die Feststoffrückführung ist in der ersten Stufe eine Feststoffanreicherung zu verzeichnen. Bei maximalen Lastbereichen ist eine Stabilisierung dieser Feststoffe als Voraussetzung einer geruchlosen Trocknung und Ablagerung nicht gegeben. Deshalb werden diese Feststoffe der ersten Stufe im Trichter des hochbelasteten Reaktors eingedickt und anschließend als Feststoffüberschuß in die zweite Stufe übergepumpt. Hier erfolgt dann die vollständige Stabilisierung bei niedrigen Belastungen. Dies erfordert eine weitestgehende Eindickung auf ≧ 10 %. Gewährleistet wird diese Eindickung durch das Zusammenwirken des gewählten Abscheidesystems mit der Eindickzone im Reaktor der ersten Stufe, wofür 10 % des Reaktorvolumens nicht in das Umwälzsystem einbezogen werden. Im vorliegenden Beispiel erfolgt die Einstellung eines Trockensubstanzgehaltes von 60 TS/m³ im Reaktor der ersten Stufe durch die in die erste Stufe eingetragenen Feststoffe, die durch den hohen Substratumsatz erzeugte und durch die Röhrensedimentation zurückgehaltene Biomasse sowie den gesteuerten Abzug des Biomasse-Feststoffgehaltes mit 10 % TS aus der nicht durchmischten unteren Eindickzone des Reaktors, die 10 % seines Volumens beträgt.

Aus der zulässigen oTS-Belastung von 0,12 kg/kg . d der ersten Stufe folgt ein erforderliches Reaktorvolumen von

$$V_{erf.} = \frac{30\ 000\ kg\ oTS/d}{60\ kg\ TS/m^3\ .\ 0,12\ kg/kg\ .\ d} \approx 4170\ m^3.$$

Die Biogasbildungsgeschwindigkeit beträgt bei der gewählten oTS-Belastung 37 l/kg . d, die theoretisch mögliche Biogasproduktion bei vollständiger Ausfaulung jedoch 480 l/kg oTS. Damit ergibt sich in der ersten Stufe ein oTS-Umsatz von 64 %.

Das aus dem Reaktor der ersten Stufe mittels Pumpe aus der Eindickzone entnommene Biomasse-Feststoffgemisch wird zur vollständigen Stabilisierung, d. h. Reduzierung des organischen Anteiles auf weniger 55 %, in den Reaktor der zweiten Stufe übergepumpt. Dieser Reaktor wird bei niedrigen Belastungen von<0,025 kg oTS/kg TS . d und<0,015 kg CSV$_{Cr}$/kg TS . d gefahren. Der Trockensubstanzgehalt wird mittels der vorgenannten Nachkläreinrichtung und dem aus dem Reaktor der ersten Stufe zugeführten Biomasse-Feststoffgemisches ebenfalls auf 60 kg TS/m$^3$ . d eingestellt. Bei Umsetzung des restlichen oTS-Gehaltes und Einstellung einer oTS-Belastung von 0,025 kg/kg . d ergibt sich ein erforderliches Reaktorvolumen für die zweite Stufe von etwa 7200 m$^3$. Damit beträgt das erforderliche Gesamtvolumen einschließlich des notwendigem Speichervolumens in Höhe von 10 % etwa 11800 m$^3$.

## Ansprüche

1. Verfahren zur anaeroben zweistufigen Behandlung organisch belasteter Abwässer und Schlämme, bei dem in der ersten Stufe eine höhere Raumbelastung eingestellt wird, dadurch gekennzeichnet, daß die erste Stufe mit hohem Substratumsatz und die zweite Stufe mit weitgehender Stabilisierung der organischen Substanz gefahren wird, die in die erste Stufe eingetragenen Feststoffe sowie die durch den hohen Substratumsatz erzeugte Biomasse im Reaktor mittels der an sich bekannten Röhrensedimentation zurückgehalten und angereichert werden, wobei die Feststoffe gleichzeitig Träger der Biomasse sind und durch eine gezielte Eindickung mittels eines gesteuerten Abzuges des Biomasse-Feststoffgemisches feststoffbezogene Leistungsgrenzen für die erste Stufe von max. oTS Feststoffbelastung ≤ 0,12 kg/kg TS . d und max. CSV$_{Cr}$ Feststoffbelastung ≤0,09 kg/kg TS . d eingestellt werden, und daß mit dem Feststoffabzug das Überschußschlamm-Feststoffgemisch in die nachfolgende schwachbelastete zweite Stufe zur Stabilisierung übergepumpt wird, wobei der organische Anteil auf ≤ 55 % durch Regulierung der maximalen Belastungswerte von oTS-Feststoffbelastung ≤ 0,025 kg/kg TS . d und CSV$_{Cr}$ Feststoffbelastung ≤ 0,015 kg/kg TS . d reduziert wird.

2. Verfahren nach Anspruch 1, dadurch gekennzeichnet, daß die Grenzwerte durch die an sich bekannte Röhrensedimentation eingestellt werden, wobei die Verbindungsleitungen mit einem Neigungswinkel von 40 bis 60° von unten aus dem ersten Reaktor nach oben in den zweiten Reaktor geführt werden und das Verhältnis von Länge zu Querschnitt der Verbindungsleitungen ≧ 8 : 1 beträgt.

3. Verfahren nach Anspruch 1 und 2, dadurch gekennzeichnet, daß das Biomasse-Feststoffgemisch der ersten Stufe im gewählten Feststoffabscheidesystem im Zusammenwirken mit einer an sich bekannten, nicht durchmischten Eindickzone von 10 % des Reaktorvolumens auf einen Feststoffgehalt von ≧ 10 % eingedickt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2064529 (THE DORR COMPANY)<br>* Spalte 1, Zeile 1 - Spalte 1, Zeile 32 *<br>* Spalte 1, Zeile 51 - Spalte 2, Zeile 29 *<br>* Spalte 2, Zeile 45 - Spalte 3, Zeile 8 *<br>* Spalte 4, Zeile 22 - Spalte 4, Zeile 63 *<br>--- | 1 | C02F3/28<br>B01D21/00 |
| A | GB-A-1411659 (P.R.JEFFCOATE ET AL.)<br>* Seite 1, Zeile 13 - Seite 1, Zeile 17 *<br>* Seite 3, Zeile 70 - Seite 3, Zeile 120 *<br>--- | 1, 2 | |
| A | FR-A-2553400 (OTV)<br>* Seite 6; Ansprüche 1, 3, 5 *<br>--- | 2 | |
| A | WATER RESEARCH.<br>vol. 18, no. 12, Dezember 1984, OXFORD GB<br>M.F.Hamoda et al.:<br>"Effect of settling on performance of the upflow anaerobic sludge bed reactors"<br>* Seite 1566, Conclusions<br>--- | 3 | |
| A | GWF Wasser, Vol.127, Heft 3, März 1986, Seite 109 -117; F.Wechs: "Untersuchungen zur Optimierung der zweistufigen anaeroben Klärschlammstabilisie rung" ;<br>* S.114, Punkt d) "Abbauleistung"; Seite 115, "Zweistufige anaerobe Klärschlammstabilisierung" a)Abbau; Seite 116, "Schlußfolgerungen aus den Ergebnissen";<br>----- | 1 | RECHERCHIERTE SACHGEBIETE (Int. Cl.5)<br><br>C02F |

Der vorliegende Recherchenbericht wurde für alle Patentansprüche erstellt

| Recherchenort | Abschlußdatum der Recherche | Prüfer |
|---|---|---|
| DEN HAAG | 04 OKTOBER 1990 | TEPLY J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes Dokument

EPO FORM 1503 03.82 (P0403)